# EUROPEAN PATENT SPECIFICATION

(11) **EP 1 237 115 B1**
(45) Date of publication and mention of the grant of the patent: **11.05.2005**
(21) Application number: 02075780.3
(22) Date of filing: 21.02.2002
(51) Int. Cl.: G06K 9/20

(54) **Automatic table location in documents**
Automatische Lokalisierung von Tabellen in Dokumenten
Localisation automatique des tableaux dans des documents

(30) Priority: 22.02.2001 EP 01400470
(43) Date of publication of application: 04.09.2002
(73) Proprietor: Océ Print Logic Technologies S.A., 94000 Créteil (FR)
(72) Inventor: Najman, Laurent Alain, 75019 Paris (FR); Barbey, Mickael Bernard Louis, 92400 Courbevoie (FR)
(74) Representative: Van de Sande, J.H.A.W.

(56) References cited:
- US-A- 5 680 478
- US-A- 5 774 584
- US-A- 6 137 905
- SYEDA-MAHMOOD T: "Locating indexing structures in engineering drawing databases using location hashing" PROCEEDINGS. 1999 IEEE COMPUTER SOCIETY CONFERENCE ON COMPUTER VISION AND PATTERN RECOGNITION (CAT. NO PR00149), FORT COLLINS, CO, USA, 23-25 JUNE 1999, pages 49-55 Vol. 1, XP002170777 1999, Los Alamitos, CA, USA, IEEE Comput. Soc, USA ISBN: 0-7695-0149-4
- R. CASEY, D. FERGUSON, K. MOHIUDDIN, E. WALACH: "Intelligent Forms Processing System" "MACHINE VISION AND APPLICATIONS" / SPRINGER-VERLAG, vol. 5, 1992, pages 143-155, XP000828276 New York

## Description

The present invention relates to a method of automatically locating a table in a document, the method comprising the steps of defining a plurality of crops of the document, and for each crop of the document, determining the location of lines whose lengths is greater than or equal to a predetermined threshold value. Tables or table-like structures may be, for example, the whole or parts of tables present on forms (a "table", here, being a two-dimensional assembly of cells). However, the present invention is of particular interest with regard to the automatic locating of title blocks (or "legends") in technical drawings. In the present document, the term "table" is used to designate all of the aforementioned examples, and table-like structures in general.

The techniques of the present invention involve the analysis of sub-regions of the document, these sub-regions being termed "crops" of the document.

The detected image lines correspond to the lines making up the image and not pixels of the background colour of the medium on which the image is presented. The length of the detected lines may be determined in any convenient way. For example, in the case where the processed document is scanned and it is the scanned image that is analysed, it can be convenient to count the numbers of image pixels present on the different scan lines. As another example, in the case where an image of the document is analysed under an HPGL (Hewlett-Packard Graphics Language) representation, the data is in vector format and the vector information includes data on the length of the lines making up the image. Clearly, the length of a detected line may be represented in any convenient way, for example, in terms of the numbers of image pixels making up the line, in terms of conventional units of measurement (centimetres, millimetres), etc.

The techniques of the present invention will usually, but not exclusively, be applied to representations of documents, such as scanned images of documents, vector representations of the images present on documents, etc.

There are many fields in which it would be advantageous to be able automatically to detect the location of tables present in documents. One example is form processing: it is desirable to be able automatically to locate cells in tables on the forms, so that database entries can be generated automatically by reading data in the cells. Various proposals have already been made in this field. However, the majority of form-recognition computer programs currently available rely on the recognition of forms in constrained poses within images consisting of the form itself and little else.

Automatic table location is of particular interest in the field of processing technical drawings (such as mechanical engineering drawings or architectural drawings). In the latter field, if the title block of the drawing can be located automatically then the following processes can be realised:
- automatic folding of the drawing such that the title block remains visible,
- positioning of the drawing in the correct orientation (since the title block generally is located in a specified corner with respect to the image, for example, bottom right),
- in the processing of scanned images of drawings, for example using a personal computer, the title block can be displayed at an enlarged scale, to assist in manual indexing, and
- a first step is taken in the automatic indexing of drawings: once the title block has been located it is then simply a question of extracting the information contained therein.

Various standards have been defined at national and international level, governing the content and positioning of title blocks (legends) in technical drawings. These standards include ISO 5457 and ISO 7200 and French national standard NF E 04-503.

More specifically, according to the standard ISO 7200, the legend is a table-like form, composed of various rectangular cells, or "fields", located within the page. The cells contain information and three fields are compulsory:
- an identification zone giving an identification number or code to the drawing,
- a title zone, and
- a zone containing the name of the drawing's owner.

According to the standard ISO 5457, the identification portion of the title block "shall be at the right-hand bottom corner of the title block when seen in its normal direction of viewing, and have a maximum length of 170 mm". According to the French standard NF E 04-503, the dimensions of the title block shall not exceed 190 mm in width and 277 mm in height.

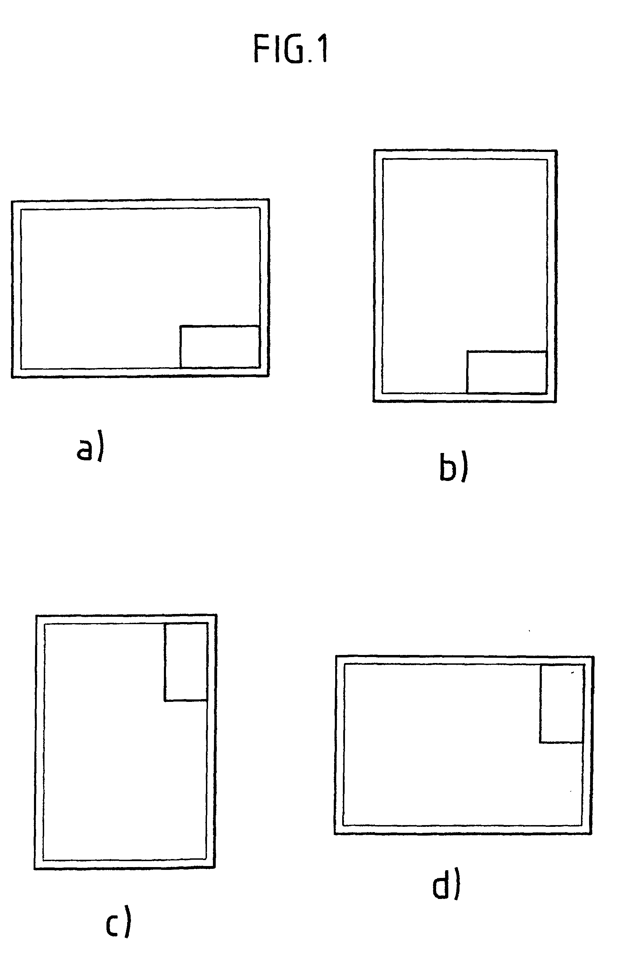

ISO 5457 also specifies that "the position of the title block should be within the drawing space such that the portion of the title block containing the identification of the drawing (registration number, title, origin, etc.) is situated in the bottom right-hand corner of the drawing space, both for sheets positioned horizontally, type X (see Fig.1a)), or vertically, type Y (see Fig.1b)). The direction of viewing of the title block should correspond in general to that of the drawing. Nevertheless, in order to economise on preprinted drawing sheets, it is permitted to use sheets type X in the vertical position (see Fig.1c)) and sheets type Y in the horizontal position (see Fig.1d)). In these cases, the identification portion of the title block should be in the right-hand top corner of the drawing space, and orientated such that the title block may be read when viewed from the right."

It will be seen that the standards allow some latitude in the positioning of title blocks in technical drawings. Moreover, the standards are constantly evolving and technical drawings do not always comply even with the rules defined in these standards. There is particular variability where old drawings are concerned. Thus, techniques for table or cell location used by form recognition software are not suitable for title block location.

Usually technical drawings have borders, a filling margin for taking perforations, a frame for limiting the drawing space, centering and orientation marks to indicate positioning and orientation. However, no reliance can be placed on these features since they are not always present. Moreover, title block location generally is performed based on scanned images of technical drawings and the above-mentioned features may be absent from the scanned image due to bad positioning of the drawing during scanning. Thus, title block location should be based upon other factors.

The paper "Automated Table Processing: An (Opinionated) Survey" by D. Lopresti and G. Nagy, from Proceedings of GREC'99, pp.109-134, shows that, where cell location in tables is concerned, in general, it is necessary to extract the table structure from an image of the document by discerning the lines defining the boundaries of the cells. Such methods are not directly applicable to title block location in technical drawings.

"An efficient algorithm for form structure extraction using strip projection" by J-L Chen and H.J. Lee, appearing in "Pattern recognition", vol.3, no.9, pp.1353-1368 (1998) proposes a method for extracting the structure of a table from an image. However, this technique is not adapted for location of specific structures, such as legends on technical drawings.

"Extracting Indexing Keywords from Image Structures in Engineering Drawings" by T. Syeda-Mahmood, from the Proceedings of ICDAR'99, pp.471-474 (1999) specifically deals with the problem of title block location in technical drawings and subsequent extraction of information from the title block. A "location hashing" method is employed to find specific two-dimensional structures. This technique is complex and has the disadvantage of requiring a learning phase to establish a model for each structure that is to be located. Thus, this method is not suitable given the variability inherent in technical drawings.

In the present inventor's earlier French patent application number 00 03639 filed on March 22, 2000, the problem of title block location is solved based on a new method for table-like form processing. However, once again this method has the disadvantage of requiring a model for each different type of title block to be located.

A title block location method is proposed in "A Practical Application of Graphics Recognition: Helping with the Extraction of Information from Telephonic Company Drawings" by J-F. Arias, A. Chhabra and V. Misra, in Proceedings of GREC'97, pp.273-279 (1997). This method is based on the FAST method described in "Detection of horizontal lines in noisy run length encoded images: The FAST method" by A. Chhabra, V. Misra and J-F. Arias, in "Graphics Recognition - Methods and Applications" ed.R. Kasturi and K. Tombre, Lecture Notes in Computer science, vol.1072, pp.35-48, Springer-Verlag, Berlin, Germany, 1996, which allows the extraction of straight lines from a crop of a drawing. After these straight lines have been extracted, the cells that are not empty are detected. The title block is located by detecting the cell with the largest area that also meets certain width-to-height ratio conditions. This overall technique is specific to documents in which the cells have particular dimensions, and so is not useful in cases where there is likely to be variation in cell size, such as in title blocks in technical drawings.

US 5,774,584 in the name of Matsumoto et al discloses an image processing method according to the preamble of Claim 1.

The method subsequently detects intersections of lines in order to e.g. identify a corner of a table, and, in particular, to identify fields in a table.

However, identifying a table according to this method falls short in case of locating a table in a technical drawing, where lots of intersections are available, not being part of a table.

The present invention seeks to overcome the problems and disadvantages inherent in the prior art methods of table location. More particularly, preferred embodiments of the present invention provide robust table-location methods and apparatus in which specific tables present on a document can be located reliably and quickly.

To this end the method according to the preamble is characterized in that the method further comprises the steps of:
evaluating a parameter indicative of the density of said lines, and
deciding which one of said plurality of crops comprises the location of said table based on said evaluated parameter.

The evaluated parameter indicative of density of detected lines may be the number of detected lines within groups defined for each crop, lines being assigned to a common group if the separation between adjacent pairs of these lines is less than a reference value. The decision process may also include consideration of the thickness of the detected lines in the different crops.

In the case where the automatic table-locating method of the invention is applied to the location of title blocks in technical drawings, it is advantageous that the plurality of

crops should correspond to the respective corners or ends of the document.

It has been found that the speed of the table-locating method according to the invention improves if the process is applied to an image of the document at reduced resolution. Moreover this also renders the method more robust.

The method according to the present invention is based on signal measurements from the whole document. Moreover, it involves evaluation of a relatively small number of parameters, each of which has a physical meaning. Accordingly it is robust and reliable. Furthermore, it is fast enough to be integrated into automatic document-processing devices.

Preferred embodiments of the method according to the present invention applied to automatic title block location in technical drawings in A4 format have given a recognition rate of 98%, with no incorrect indications of legend location, and a recognition rate of 82% for drawings in A0 to A3 formats, with only 2% of incorrect indications of legend location.

The present invention further provides an apparatus automatically locating tables in documents by application of the above-mentioned method.

Further features and advantages of the present invention will become clear from the following description of detailed embodiments thereof, given by way of example, and illustrated by the accompanying drawings, in which:
Fig.1 shows the positioning of title blocks in technical drawings specified in the international standard ISO 5457, where:
Fig.1a) shows a type X document in its usual, horizontal orientation,
Fig.1b) shows a type Y document in its usual, vertical orientation,
Fig.1c) shows a type X document orientated vertically, and
Fig.1d) shows a type Y document orientated horizontally;
Fig.2 shows an example of a technical drawing;
Fig.3 identifies crops corresponding to the respective corners of the technical drawing shown in Fig.2;
Fig.4 shows projection profiles (corresponding to the numbers of black pixels per line) in the respective corners of the technical drawing shown in Fig.2, in which:
Fig.4a) shows the projection profile corresponding to the top left-hand corner of the Fig.2 drawing,
Fig.4b) shows the projection profile corresponding to the top right-hand corner of the Fig.2 drawing,
Fig.4c) shows the projection profile corresponding to the bottom left-hand corner of the Fig.2 drawing, and
Fig.4d) shows the projection profile corresponding to the bottom right-hand corner of the Fig.2 drawing;
Fig.5 illustrates how thresholding is applied to peaks in the projection profiles according to a first preferred embodiment of the present invention;
Fig.6 illustrates how merging is applied to peaks in the projection profiles according to the first preferred embodiment of the present invention;
Fig.7 illustrates how peaks in the projection profiles are grouped according to the first preferred embodiment of the present invention;
Fig.8 illustrates steps of algorithms used in a title-block location method embodying the present invention, in which:
Fig.8a) is a flow diagram illustrating one algorithm for generating parameters indicative of the density of lines in analysed crops, and
Fig.8b) is a flow diagram illustrating one preferred algorithm for deciding which of a plurality of analysed crops contains the title block of a technical drawing; and
Fig.9 illustrates how crops within drawings of different sizes may be identified for analysis according to the preferred embodiments of the present invention.

The following description of preferred embodiments of the present invention relates to title block location in technical drawings. However it is to be understood that the techniques of the present invention are applicable in general to the location of tables in documents.

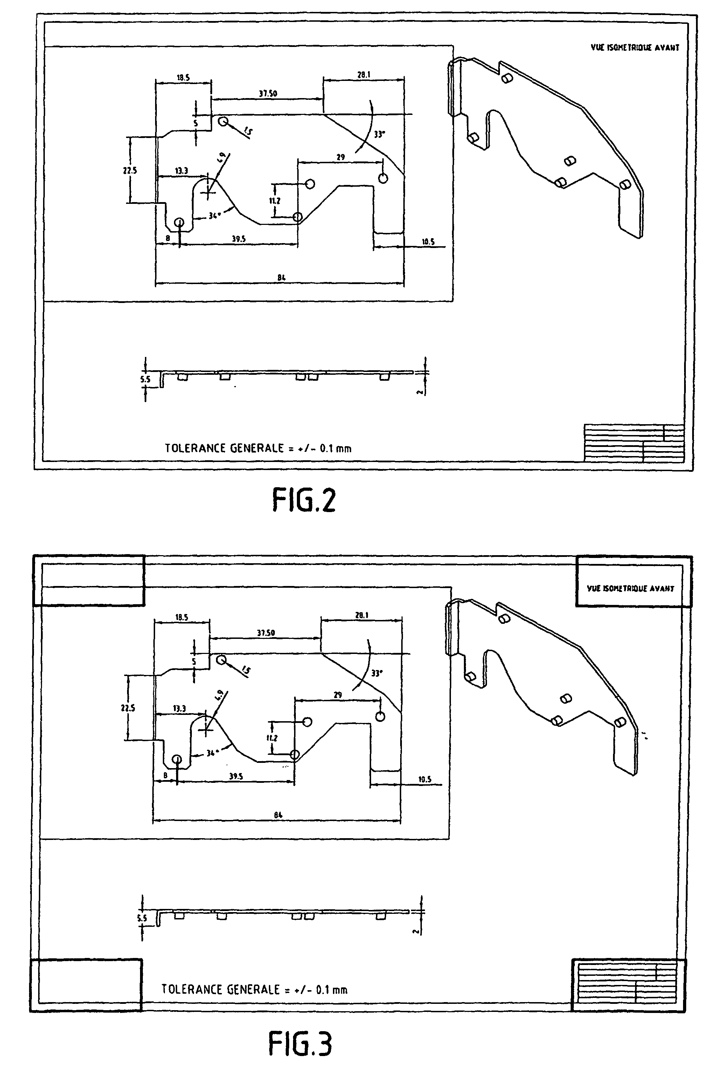

Characteristics of the main analytical steps of the method according to a first preferred embodiment of the invention will now be described with reference to Figs.2 to 8.

The present inventors have found that the title block in a technical drawing generally possesses the following characteristics:
- it is a kind of table (assembly of cells), the overall assembly having a width greater than 10 cm and a height comprised between 4 cm and 28 cm;
- the height of the component cells is usually comprised between about 0.5 cm and 3 cm; and
- it is located in one of the corners of the drawing, generally the bottom right-hand corner when seen in the normal direction for reading the contents of the title block.

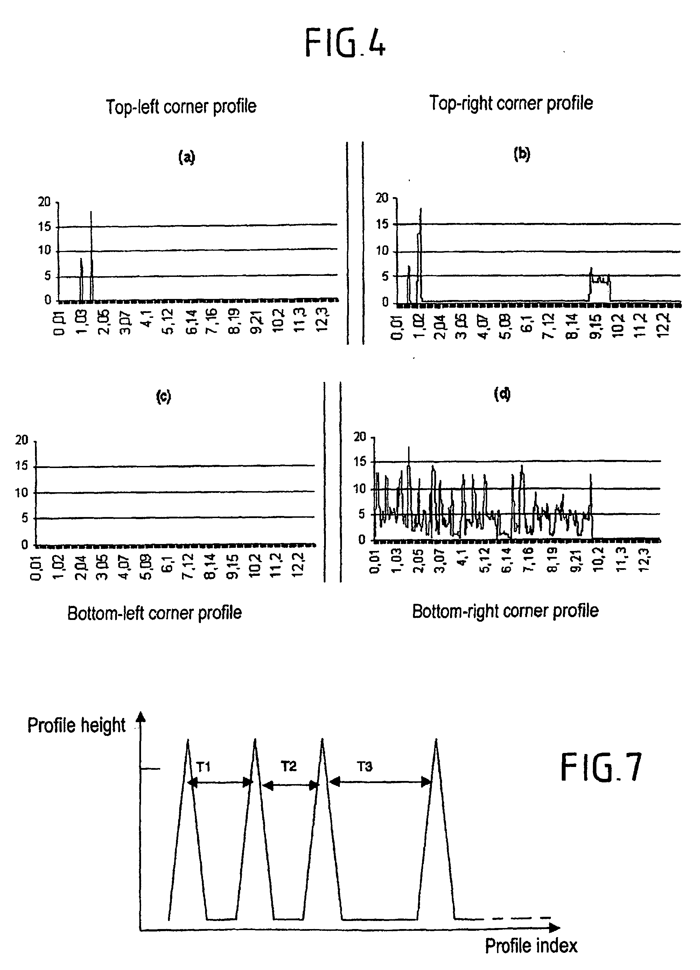

These observations have led the inventors to adopt a title-block location technique based upon analysis of respective sub-regions corresponding to the corners or ends of the drawing. As mentioned above, each such sub-region can be termed a "crop" of the image of the drawing. For example, in the case of the technical drawing illustrated in Fig.2, crops for analysis, corresponding to the corners of the drawing, may be identified as illustrated in Fig.3. More particularly, the technical drawing shown in Fig.2 is an A0 document and the crop width for each crop illustrated in Fig.3 is 18 cm, the crop height being 13 cm.

In the first preferred embodiment of the invention, crops corresponding to the corners of a drawing are analysed by evaluating the numbers of black pixels present on each horizontal line. This analysis is generally performed by a personal computer based upon a scanned image of the drawing in, for example, TIFF (Tagged Image File Format). It is convenient if the evaluated number of black pixels is represented by the length of a line that would be formed by placing this number of black pixels side-by-side. A plot of the evaluated line length with respect to the vertical position of the corresponding horizontal line is termed a "projection profile". Fig.4 shows projection profiles calculated for the four crops identified in Fig.3 based on the drawing shown in Fig.2. The corner that contains the title block is the bottom right-hand corner of the Fig.2 picture. It will be seen that the projection profile of this corner, shown in Fig.4d), contains a large number of peaks that are spaced apart in a substantially regular fashion. This corresponds to a large number of relatively long lines that are spaced apart in a regular fashion.

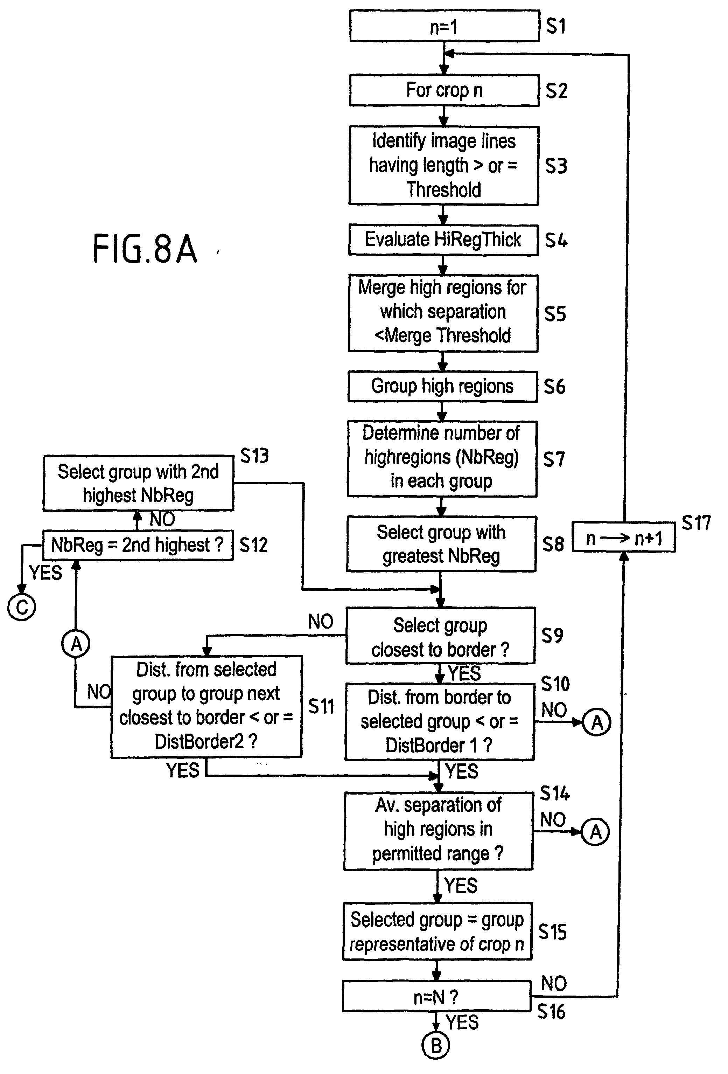

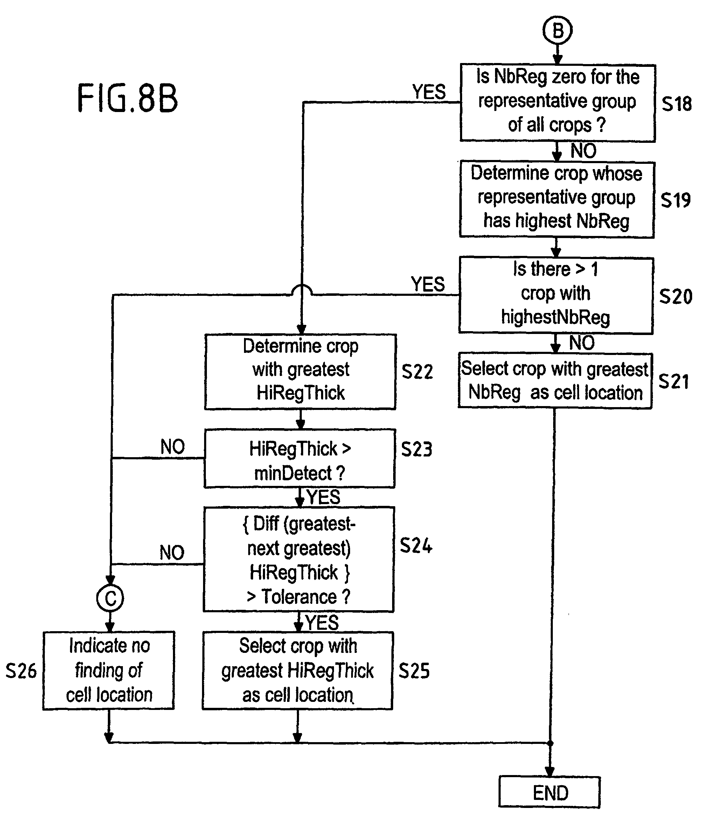

According to the first preferred embodiment of the invention, a selection is made of which crop of the drawing corresponds to or contains the title block of the drawing based upon the peaks in the projection profiles determined for the different crops. This amounts to a detection of long lines in the image of each crop. The steps of the selection process according to this embodiment are summarised in the flow diagrams of Figs.8a) and 8b), in which Fig.8a) shows the steps involved in identifying long lines and evaluating parameters indicative of the density of long lines in each crop and Fig.8b) illustrates a preferred algorithm for selecting which crop contains the title-block, based upon the evaluated parameters.

Firstly, it can be helpful to eliminate certain crops from consideration. For example, in the case of title block location in technical drawings in A0 to A3 format, the title block is almost always located in the top-left or bottom right corner of the drawing. Accordingly, the decision algorithm can be speeded up by eliminating the other corners from consideration. This can be done, for example, by setting the value of a parameter N, representing the total number of crops to analyse, to less than the total number of crops, and assigning values of the index n of crops to analyse only to those crops that are likely candidates (i.e. top-left and bottom-right), or simply by not defining crops for the unlikely corners in the first place.

For the first (n=1) of the crops that is to be analysed, the projection profile is examined and peaks are identified with respect to a predetermined threshold value (here designated "Threshold") - see steps S1-S3 of Fig.8a). In the case of title-block location in technical drawings where the crop width used for defining the various crops is 18cm, a suitable Threshold value is 10 cm. The thus-identified peaks correspond to "long" lines present in the image.

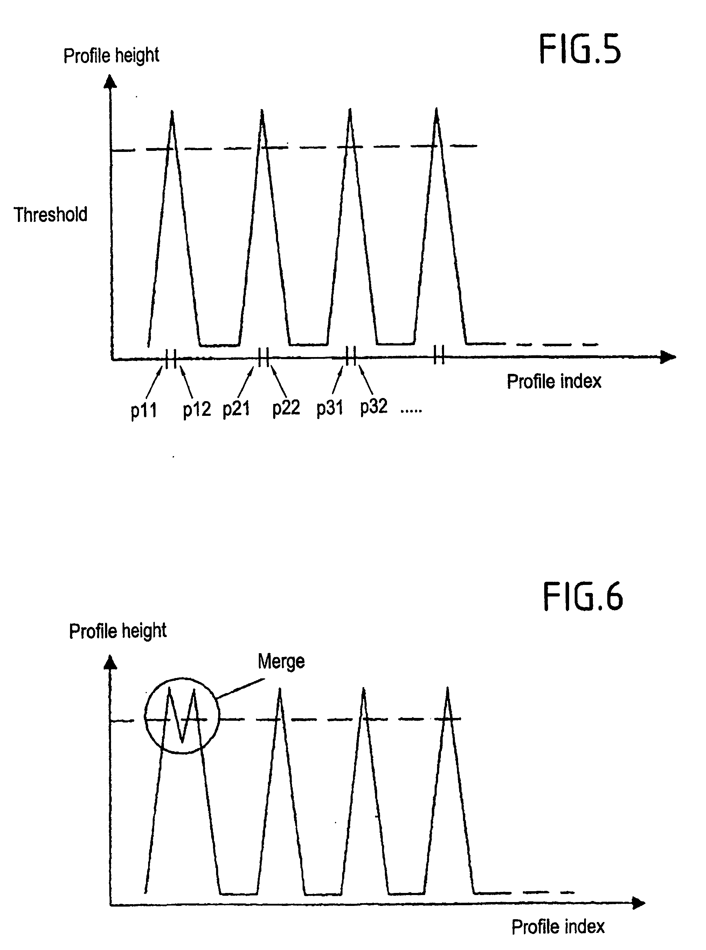

Next, for each peak, the two locations where the profile crosses the threshold value are determined and these correspond to the beginning (pi1) and end (pi2) of a "high region" in the profile, see Fig.5. A list is made of these beginning and end locations. The projection profile, S, can then be represented by this list of beginning and end locations, in other words, S = [(pi1,pi2)]i

A parameter HiRegThick is also evaluated (step S4 of Fig.8a)) and represents the global thickness of the long lines present in this crop of the drawing. HiRegThick for a particular crop is equal to the sum of the widths of the above-threshold areas in the projection profile for that crop. In other words, HiRegThick = □(pi2-pi1).

Sometimes, representation of the projection profile in terms of the list of beginning and end points of above-threshold areas can mask certain cases where there is a brief dip in the projection profile; such a case is illustrated by the circled region in Fig.6. It is not appropriate to consider the circled pair of peaks as discrete high regions, they are, in fact, portions of a common region. In other words, the pair of high regions really corresponds to a single thick line, rather than two neighbouring thin lines. Thus, in preferred embodiments of the invention, such peaks are merged into a single high region (step S5 of Fig.8a)).

As a means for deciding which pairs of peaks should be merged a reference value, termed "MergeThreshold", can be used. The list of beginning and end locations of high regions is processed to determine the separation, T, between adjacent high regions, as follows: Ti = p(i+1)1 - pi2, i □ 1, (see Fig.7). If the separation between a given pair of adjacent peaks is less than the MergeThreshold, then the peaks in question are merged. For example: if a pair of peaks represented by (p21,p22) and (p31,p32) are merged, then the entries (p21,p22) and (p31,p32) in the list are replaced by a single entry having values (p21,p32). Where technical drawings are concerned, a suitable MergeThreshold value is 0.2 cm, for example.

The above-described analysis of projection profiles according to the first preferred embodiment of the invention constitutes a process for detecting relatively long image lines within the various crops of the drawing. Once the long lines have been detected, it has been found to be advantageous, according to the present invention, to define groups of lines (step S6 of Fig.8a)), and to determine which crop comprises the table to be located, by reference to one or more parameters of these groups.

When deciding which detected lines (high regions in the projection profile) should be assigned to a given group, the separation, T, between adjacent peaks is considered once again. This time, two adjacent peaks are considered to belong to the same group if the separation between them is less than a reference value termed "PeakGroup". For a given set of peaks, adjacent peaks are considered pair-wise and, provided that the separation between each pair of adjacent peaks is less than PeakGroup, then the whole set of peaks belongs to the same group. For example, all of the peaks illustrated in Fig.7 would belong to a single group if T1, T2 and T3 were each less than PeakGroup. In fact, T1 and T2<PeakGroup, but T3>PeakGroup, such that only the three left-hand peaks of Fig.7 belong to a common group. Based on the inventors' findings with regard to the typical height of cells in title blocks of technical drawings (0.5-3 cm), it is preferable to set PeakGroup to 3 cm. The result of this grouping process is a list of groups of high regions present in each crop.

As mentioned above, each high region corresponds to a relatively long line. Each group thus corresponds to a set of long lines that are pair-wise within a separation of 3 cm from each other. If the crop corresponds to the title-block of the technical drawing then there should only be one identified group of long lines. However, multiple groups of long lines can be identified for crops that contain certain types of images.

Next, it is convenient to select one group to be representative of each respective crop. Preferably the representative group will be the one that contains the greatest number of high regions (long lines); the number of lines per group being here designated NbReg and evaluated in step S7 of Fig.8a). However, there are circumstances in which it may be preferable to select the group containing the second highest value of NbReg (that is, the second greatest number of high regions). In particular, the first choice group (and second choice group, if necessary) is validated with reference to the distance between that group and the image border. If the selected group is the closest group to the image border, then the distance is compared with a reference value termed DistBorder1 (steps S9-S10 of Fig.8a)). If the selected group is the second closest group to the image border then the distance between this group and that closest to the border is compared with a reference value DistBorder2 (step S11 of Fig.8a)). If the compared distance is greater than the respective reference value then the selected group cannot correspond to the title block of the drawing. Based upon the inventors' findings, it is preferable to set DistBorder1 to 3 cm and DistBorder2 to 2.5 cm.

In preferred embodiments of the invention, a further test is performed to validate the group selected to represent each crop. More especially, the average distance between high regions in the representative group should be within a predetermined range of values (checked in step S14 of Fig.8a)). This average distance can be compared to the average height of a cell in the title block. Accordingly, based upon the inventors' findings in this respect, this average distance should be in the range if 0.5-3 cm (inclusive) if the representative group corresponds to the title block of the technical drawing.

If the two groups containing the greatest number of high regions are invalid, it would, in theory, be possible to select the group having the next greatest number of high regions to represent this crop, provided that this group is valid (with reference to the above DistBorder2 and average-distance tests). However, it has been found that better results are achieved if, instead, it is decided to eliminate the crop in question from consideration as the location of the title block (note at step S12 of Fig.8a the branch to point C on Fig.8b)). If the group having the highest (or second highest) number of high regions is valid, then that group is selected as the group representative of the crop in question (step S15).

Preferably, the decision as to which crop comprises the title block of the drawing is taken based upon the properties of the representative groups selected for each crop. Fig.8b) shows a flow diagram representing a preferred algorithm for making the decision.

First, it is determined in steps S18 to S20 whether there is a single crop having NbReg greater than that of all the other crops. If "yes", then this single crop is selected as the table location, in step S21, and the decision process ends. However, if NbReg is zero for all crops (determined in step S18) then the decision on table location is based on the parameter HiRegThick. The crop having the greatest value of HiRegThick is determined in step S22. This crop will be selected as the table location (in step S25) and the decision process will end, provided that this value of HiRegThick has passed two tests. The first test (step S23) verifies that HiRegThick is greater than a reference value termed "MinDetect". MinDetect represents a measure of the minimum thickness that is likely to be exhibited by the aggregate of the long lines delimiting the cells in a title block. Based upon the inventors' findings, it is preferable to set MinDetect to 0.3 cm. The second test (step S24) verifies that the difference between the value of HiRegThick for the selected crop and the next highest value of HiRegThick exceeds a value termed "Tolerance". Based upon the inventors' findings, it is preferable to set Tolerance at 50% of the HiRegThick value being tested.

If the highest value of HiRegThick fails either of the above two tests, then the method returns an indication that no finding could be made with regard to the location of the title block (step S26). It is up to the user to determine the title block location "manually". This is termed a "rejection".

f, in step S20, it is determined that the highest value of NbReg is shared by two or more crops, it is preferred to signal, once again, that no finding can be made regarding the location of the title block (step S26).

The above description outlines the major steps of the analysis performed in the preferred embodiments of the invention. The above-described method for locating title blocks in technical drawings has been applied successfully, even in the case of old drawings and drawings in which the title block is partially erased. Tests measuring the reliability of the method are described in greater detail below. However, before presenting the test results it is appropriate to consider certain pre-processing stages that can be associated to the above-described method steps so as further to improve the reliability and/or speed of the title-block location process. The pre-processing preferably includes the following stages:
- verification of format (in terms of paper size) and resolution (in terms of dots per inch),
- reduction in resolution of the image to be analysed,
- deskewing of the image to be analysed, and
- detection of a frame or border surrounding the image (such a border or frame is generally present in technical drawings).

It is advantageous to verify the format and resolution of the document to be analysed for a number of reasons. Firstly, in some cases the information on the drawing will be so bad that no meaningful analysis can be performed. Secondly, it is preferred to define different crops for drawings in A4 format as compared with drawings in A0 to A3 formats (see below). The drawing resolution (in terms of dots per inch), picture height and width are checked and compared with standard values. If the measured surface values are within 25% of standard values then the drawing is accepted for analysis. Otherwise, the method returns a rejection of the drawing.

Experiments have shown that the speed and reliability of the detection method according to the present invention are both improved if the analysis is performed on an image of the drawing at reduced resolution. It is believed that the improvement in reliability stems from the reduction process itself, which tends to intensify lines and restore broken lines. Based on the inventors' findings, it is preferable to generate an image of the drawing at a resolution of 50 dots per inch, then to calculate the projection profile, etc. from this reduced-resolution image.

Given that the first preferred embodiment of the invention involve analysis of a scanned image of a drawing, misalignment errors (skew) can arise during the scanning process. This reduces the performance of the described method. It is therefore advantageous to detect skew and correct for it before applying the analysis steps of the present invention. Various algorithms for detecting and correcting skew are available on the market (see, for example, techniques mentioned in "Skew reconstruction based on maximization of variance of transition-counts" by Y. K. Chen and J. F. Wang, in Pattern Recognition 33 (2000), pp.195-208).

During the pre-processing stages, it is preferred to detect the frame that generally is drawn around the principal drawing. As explained above, information regarding the positioning of the frame is preferably used to validate the choice of representative groups for the crops (by way of the values DistBorder1 and DistBorder2). The preferred method for detecting the frame consists in generating horizontal and vertical projection profiles for the edges of the document and analysing these projection profiles so as to find the longest lines in the neighbourhood of the four document edges. If these lines intersect, then they are considered to represent the picture frame. Another method for finding the picture frame consists in detecting the largest box present on the document.

If it proves impossible to detect the frame located around the drawing then it would be possible to validate the choice of representative group selected for a given crop with reference to the edge of the document rather than with reference to the frame. However, in general, in cases where no frame can be located it is considered preferable to issue a "rejection", indicating that no location can be specified for the title-block.

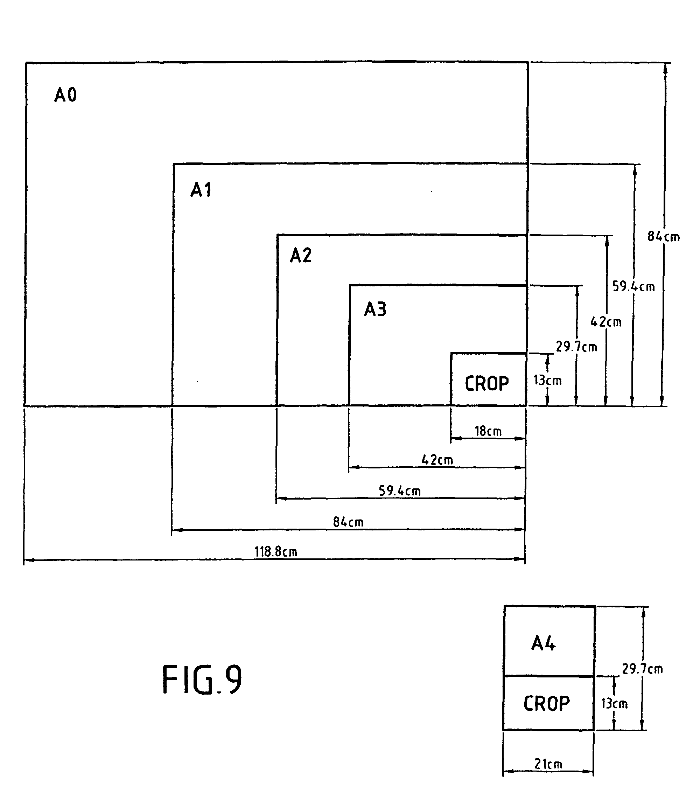

In the above description of the method according to preferred embodiments of the invention, the corner crops used to define the various crops had crop width 18 cm and crop height 13 cm. It has been found advantageous to use corner crops having these dimensions when locating title blocks in documents of A0 to A3 format. However, when locating title blocks in A4 documents, it is preferred to use end crops corresponding to the top and bottom ends of the document, giving a crop width of 21 cm (equal to the width of the sheet) and a crop height still of 13 cm. Fig.9 illustrates the preferred crop dimensions with respect to all of the main paper formats.

In the above-described first preferred embodiment of the invention, lines are detected in the various crops of the document by evaluating the numbers of image pixels present on lines of a scanned image of the document (generating a projection profile). In a second preferred embodiment of the invention, where the document to be analysed is represented by data in a vector format (such as HPGL), the corresponding projection profile is generated directly from the vector data, which indicates the lengths and positions of lines in the image, and the thickness of the respective lines. In a third preferred embodiment of the invention, lines on the document to be analysed are found by the "FAST" method of Chhabra, Misra and Arias, mentioned above. The line data, however it is derived, is processed to determine the location of lines having a length above the above-mentioned Threshold value, and to assign the various lines to one or more groups with reference to the PeakGroup reference value. The value of the parameter HiRegThick is determined by summing the thicknesses of the lines in a given crop. The rest of the processing is substantially the same as for the first preferred embodiment of the invention except that the above-mentioned pre-processing stages are not required.

Tests were performed on a database of scanned images of 788 technical drawings, to evaluate the effectiveness of the methods according to the present invention. The scanned drawings were in TIFF format and corresponded to 500 TIFF pictures for the A0 to A3 formats and 288 TIFF pictures for the A4 format. Depending upon the origin of the drawing the resolution varied (from 200 to 400 dpi) and there were differences in scan quality. Some drawings had the legend partly erased, some had incomplete main frames due to scan problems and some had black borders. Legend types varied also.

The tests measured:
- the percentage of title blocks correctly located (termed "recognition rate"),
- the percentage of drawings for which the method did not return a finding for the legend location (termed "rejection rate"), and
- the percentage of drawings for which the method gave an incorrect location for the title block (termed "confusion rate").

The tests sought to prove the effectiveness of the methods according to the present invention in title block location and to evaluate what effect the deskewing and resolution-reduction pre-processing stages have on the reliability of the method. The test results were obtained using the method of the first preferred embodiment of the invention and are summarised in Table 1.

**TABLE 1**

| | Recognition rate | Confusion rate | Rejection rate |
|---|---|---|---|
| Without deskewing or reduction | 65% | 1% | 34% |
| With deskewing, without reduction (A4) | 98% | 0% | 2% |
| With deskewing, without reduction (A0-A3) | 80% | 2% | 18% |
| With deskewing and reduction to 50dpi (A0-A3) | 82% | 2% | 16% |

The test results show that the method according to the present invention provides reliable indications of the location of title blocks in technical drawings. In particular, there is a very low confusion rate, with an incorrect legend location being indicated in 1 or fewer cases in 50. Moreover, the tests show that improvements in recognition rates can be obtained by applying deskewing and resolution-reduction to the scanned images that are analysed. It was also found in the tests that reducing resolution to 50dpi reduced the processing time for an A0 document from around 5 seconds to less than 1 second.

Closer study of the tests results obtained when deskewing was applied but no reduction in resolution, showed that, for the drawings in A4 format, many of the cases where the method failed to provide an indication of title block location were due to the presence of a black border in the scanned image. Black borders also caused some of the cases of confusion for drawings in A0-A3 format. For drawings in A0-A3 format, rejections mainly arose in the case of old drawings having strange title blocks. For these drawings, other causes of confusion were: the presence in the top-left or bottom-right corner of the drawing of tables having more guidelines than were present in the title block, scan imperfections in the drawings (leading to bent or broken lines), and drawings having partially erased legends (although, in the vast majority of such cases, this leads to rejection rather than confusion).

When both deskewing and reduction in resolution are applied, recognition rate improvements are seen for drawings in all formats. Confusions are mostly due to tables appearing in the corner opposite to the legend.

Further tests were conducted in which the reduction was to 100 dpi rather than to 50 dpi. Although this gave rise to a slight improvement in recognition rates, the effect was not significant.

Still further tests were conducted to determine whether or not it would be feasible to base the decision on which crop contains the title block solely upon the parameter HiRegThick, with or without conditions upon acceptable values of this parameter. These tests showed that either the recognition rate was reduced and/or the confusion rate was unacceptably increased.

All of the above-described tests involved implementation of the method according to the present invention by a computer program written in a script language on top of an image library in C++. It is envisaged that further improvements may be made in the processing speed by rewriting the program entirely in C++. Additional improvements would be obtained by adding a black-border removal algorithm as a further pre-processing stage.

Although the present invention has been described with reference to specific preferred embodiments thereof, it is to be understood that numerous variations and modifications can be made without departing from the invention.

For example, in the preferred embodiments of the invention crops corresponding to the corners or ends of a scanned document are analysed. The decision to analyse only the corners or ends of the document is advantageous in the case of title block location in technical drawings on the grounds that it speeds up the process, since the title blocks are generally located in one corner. However, there are circumstances in which it may be preferable to analyse crops corresponding to other portions of the document, even to the extent that the set of crops covers the whole of the document.

Moreover, it may not always be appropriate to evaluate the numbers of black pixels present along lines of the analysed crop, as in the first preferred embodiment. If the image is rendered in negative then it would be more appropriate to count white pixels. For colour documents, it might be preferable to evaluate the numbers of pixels of some colour other than black. In general, it is desirable to count image pixels, that is the pixels making up the image and not the pixels of the background colour of the medium on which the drawing is presented.

Moreover, the above description of preferred embodiments of the invention presented a combination of specific method steps and parameter values. It is to be understood that the present invention is not limited to this specific combination of features. More particularly, these features are separable and can be combined in different sub-combinations. The scope of the invention is, thus, to be limited only as specifically mentioned in the claims.

## Claims

1. A method of automatically locating a table in a document, the method comprising the steps of:
defining a plurality of crops of the document, and
for each crop of the document, determining the location of lines whose length is greater than or equal to a predetermined threshold value (S3), **characterized in that** the method further comprises the steps of
evaluating at least one parameter indicative of the density of said lines (S8), and
deciding, based on said at least one evaluated parameter, which one of said plurality of crops comprises the location of said table (S21).

2. The automatic table-locating method of claim 1, applied to title block location in technical drawings.

3. The title-block locating method of claim 2, wherein said plurality of crops correspond to respective corners of the document.

4. The automatic table-locating method of claim 1, 2 or 3, wherein:
the evaluating step comprises defining groups of said lines, two or more adjacent lines being allocated to a common group if the separation between adjacent ones of said two or more lines is less than a reference value; and
wherein the deciding step includes the step of evaluating at least one parameter of the groups of lines defined for the different crops.

5. The automatic table-locating method of claim 4, wherein the decision process includes the steps of:
for each crop, evaluating the number of said lines in each group, and designating as representative of the crop the group having the greatest number of lines and passing a validation test, and
selecting as the crop comprising the location of the table that crop whose representative group has the greatest number of lines.

6. The automatic table-locating method of claim 5, wherein the validation step comprises the step of evaluating the distance of the group from a border on the document.

7. The automatic table-locating method of claim 5 or 6, wherein the validation step comprises the step of evaluating the separation between adjacent lines within the group.

8. The automatic table-locating method of claim 5, 6 or 7, and comprising the step of evaluating the sum of the thicknesses of said lines for each crop and wherein, in the event that there is no crop having a representative group with the greatest number of lines, the decision process includes the step of determining whether there is a crop having an evaluated thickness sum that is significantly greater than the corresponding evaluated thickness sum for the other crops and, if so, designating that crop as the location of the table and, if not, generating a signal indicative of failure to select a location of the table.

9. The automatic table-locating method of any previous claim, and comprising a preliminary step of verifying the format of the document to be analysed.

10. The automatic table-locating method of any previous claim and comprising the step of determining the location of a frame present on the document and defining a border.

11. The automatic table-locating method of any previous claim applied to an image of the document at a reduced resolution.

12. The automatic table-locating method of any previous claim applied to a scanned image of the document, and comprising the step of deskewing the scanned image before applying the method.

13. Apparatus for automatically locating a table in a document comprising means for carrying out each step of the method according to any one of claims 1 to 12.

## Patentansprüche

1. Verfahren zur automatischen Lokalisierung einer Tabelle in einem Dokument, mit den folgenden Schritten:
definieren mehrerer Auszüge des Dokuments und
für jeden Auszug: bestimmen des Ortes von Linien, deren Länge größer oder gleich einem vorbestimmten Schwellenwert ist (S3),
**dadurch gekennzeichnet, daß** das Verfahren weiterhin die folgenden Schritte aufweist:
bewerten wenigstens eines Parameters, der die Dichte dieser Linien angibt (S8), und
entscheiden auf der Grundlage dieses wenigstens einen bewerteten Parameters, welcher der mehreren Auszüge den Ort der Tabelle enthält (S21).

2. Verfahren nach Anspruch 1, angewandt auf die Lokalisierung von Titelblöcken in technischen Zeichnungen.

3. Verfahren nach Anspruch 2, bei dem die mehreren Auszüge den jeweiligen Ecken des Dokuments entsprechen.

4. Verfahren nach Anspruch 1, 2 oder 3, bei dem:
der Bewertungsschritt die Definition von Gruppen dieser Linien einschließt, wobei zwei oder mehrere benachbarte Linien einer gemeinsamen Gruppe zugewiesen werden, wenn der Abstand zwischen benachbarten Linien unter diesen zwei oder mehr Linien kleiner ist als ein Bezugswert, und
der Entscheidungsschritt den Schritt der Bewertung wenigstens eines Parameters der für die verschiedenen Auszüge definierten Gruppen von Linien einschließt.

5. Verfahren nach Anspruch 4, bei dem der Entscheidungsprozeß die folgenden Schritte einschließt:
für jeden Auszug: bewerten der Anzahl von Linien in jeder Gruppe und Kennzeichnung derjenigen Gruppe, die die größte Anzahl von Linien hat und einen Validierungstest bestanden hat, als Repräsentanten des Auszugs und
auswahl des Auszugs, dessen Repräsentanten-Gruppe die größte Anzahl von Linien hat, als Auszug, der den Ort der Tabelle enthält.

6. Verfahren nach Anspruch 5, bei dem der Validierungsschritt den Schritt der Bewertung des Abstands der Gruppe von einem Rand des Dokuments einschließt.

7. Verfahren nach Anspruch 5 oder 6, bei dem der Validierungsschritt den Schritt der Bewertung des Abstands zwischen benachbarten Linien innerhalb der Gruppe einschließt.

8. Verfahren nach Anspruch 5, 6 oder 7, mit dem Schritt der Bewertung der Summe der Dicken der Linien für jeden Auszug, wobei, wenn es keinen Auszug gibt, dessen repräsentative Gruppe die größte Anzahl von Linien hat, der Entscheidungsprozeß den Schritt der Feststellung einschließt, ob es einen Auszug gibt, der eine bewertete Dickensumme hat, die signifikant größer ist als die entsprechende bewertete Dickensumme für die anderen Auszüge, und, wenn ja, kennzeichnen dieses Auszugs als Ort der Tabelle und, wenn nein, Erzeugen eines Signals, das einen Fehlschlag bei der Auswahl eines Ortes der Tabelle anzeigt.

9. Verfahren nach einem der vorstehenden Ansprüche, mit einem vorausgehenden Schritt der Verifikation des Formats des zu analysierenden Dokuments.

10. Verfahren nach einem der vorstehenden Ansprüche, mit dem Schritt der Bestimmung des Ortes eines Rahmens, der auf dem Dokument vorhanden ist und einen Rand definiert.

11. Verfahren nach einem der vorstehenden Ansprüche, angewandt auf ein Bilddokument mit reduzierter Auflösung.

12. Verfahren nach einem der vorstehenden Ansprüche, angewandt auf ein eingescanntes Bild des Dokuments, mit dem Schritt der Schräglagenkorrektur des eingescannten Bildes vor Anwendung des Verfahrens.

13. Vorrichtung zur automatischen Lokalisierung von Tabellen in einem Dokument, mit einer Einrichtung zur Ausführung jedes Schrittes des Verfahrens nach einem der Ansprüche 1 bis 12.

## Revendications

1. Procédé de localisation automatique de table dans un document, le procédé comprenant les étapes consistant à:
définir une pluralité de découpes du document, et
pour chaque découpe du document, déterminer l'emplacement des lignes dont la longueur est supérieure ou égale à une valeur de seuil prédéterminée (53),
**caractérisé en ce que** le procédé comprend en outre les étapes consistant à:
évaluer au moins un paramètre indicatif de la densité desdites lignes (58), et
décider, sur la base dudit au moins un paramètre évalué, laquelle de ladite pluralité de découpes comprend l'emplacement de ladite table (52').

2. Procédé de localisation automatique de table selon la revendication 1, appliqué à l'emplacement du bloc-titre dans des dessins techniques.

3. Procédé de localisation de bloc-titre selon la revendication 2, dans lequel ladite pluralité de découpes correspondent à des coins respectifs du document.

4. Procédé de localisation automatique de table selon la revendication 1, 2 ou 3, selon lequel:
l'étape d'évaluation comprend la définition de groupes desdites lignes, deux ou plus de deux lignes adjacentes étant affectées à un groupe commun si la séparation entre des lignes adjacentes parmi lesdites deux ou plus de deux lignes est inférieure à une valeur de référence; et
selon lequel l'étape de décision inclut l'étape d'évaluation d'au moins un paramètre des groupes de lignes, définis pour les différentes découpes.

5. Procédé de localisation automatique de table selon la revendication 4, selon lequel le processus de décision inclut les étapes consistant à:
pour chaque découpe, évaluer le nombre desdites lignes dans chaque groupe et désigner comme représentatif de la découpe, le groupe possédant le nombre maximum de lignes et passant avec succès un test de validation, et
lorsque la découpe inclut l'emplacement de la table, sélectionner la découpe dont le groupe représentatif possède le nombre maximum de lignes.

6. Procédé de localisation automatique de table selon la revendication 5, dans lequel l'étape de validation inclut l'étape d'évaluation de la distance du groupe par rapport à un bord du document.

7. Procédé de localisation automatique de table selon la revendication 5 ou 6, selon lequel l'étape de validation comprend l'étape d'évaluation de la séparation entre des lignes adjacentes à l'intérieur du groupe.

8. Procédé de localisation automatique de table selon la revendication 5, 6 ou 7 et comprenant l'étape consistant à évaluer la somme des épaisseurs desdites lignes pour chaque découpe, et selon lequel dans le cas où il n'existe aucune découpe comportant un groupe représentatif possédant le nombre maximum de lignes, le processus de décision inclut l'étape consistant à déterminer si une découpe possède une somme d'épaisseurs évaluée, qui est nettement supérieure à la somme d'épaisseurs évaluée correspondante pour les autres découpes et, s'il en est ainsi, désigner cette découpe en tant qu'emplacement de la table et, si non, produire un signal indicatif d'une défaillance pour la sélection d'un emplacement de la table.

9. Procédé de localisation automatique de table selon l'une quelconque des revendications précédentes et comprenant une étape préliminaire de vérification du format du document à analyser.

10. Procédé de localisation automatique de table selon l'une quelconque des revendications précédentes et comprenant l'étape de détermination de l'emplacement d'une trame présente sur le document et définissant une bordure.

11. Procédé de localisation automatique de table selon l'une quelconque des revendications précédentes appliqué à une image du document, pour une résolution réduite.

12. Procédé de localisation automatique de table selon l'une quelconque des revendications précédentes, appliqué à une image scannée du document et comprenant l'étape de suppression de désalignement de l'image scannée avant l'application du procédé.

13. Dispositif de localisation automatique d'une table dans un document, comprenant des moyens pour exécuter chaque étape du procédé selon l'une quelconque des revendications 1 à 12.
